Europäisches Patentamt

European Patent Office

Office européen des brevets

(19)

(11) Veröffentlichungsnummer: **0 224 103 B1**

# EUROPÄISCHE PATENTSCHRIFT

(12)

(45) Veröffentlichungstag der Patentschrift: **11.09.91**

(51) Int. Cl.5: **B29C 67/22**

(21) Anmeldenummer: **86115537.2**

(22) Anmeldetag: **08.11.86**

(54) Adaptives Steuerverfahren zum Schäumen und Sintern von Kunststoff.

(30) Priorität: 22.11.85 DE 3541258

(43) Veröffentlichungstag der Anmeldung:
03.06.87 Patentblatt 87/23

(45) Bekanntmachung des Hinweises auf die
Patenterteilung:
11.09.91 Patentblatt 91/37

(84) Benannte Vertragsstaaten:
AT CH ES FR GB IT LI NL

(56) Entgegenhaltungen:
DE-A- 3 243 632
DE-A- 3 502 006

PATENT ABSTRACTS OF JAPAN, Band 7, Nr.
29 (M-191)[1174], 5. Februar 1983; & JP-A-57
182 411 (HITACHI SEISAKUSHO K.K.)
10-11-1982

PATENT ABSTRACTS OF JAPAN, Band 9, Nr.
264 (M-423)[1987], 22. Oktober 1985; & JP-
A-60 112 430 (SEKISUI KOUKI SEISAKUSHO
K.K.) 18-06-1985

(73) Patentinhaber: **Hahn, Ortwin, Prof. Dr.-Ing.**
**Hüfferweg 9**
**W-4790 Paderborn(DE)**

(72) Erfinder: **Hahn, Ortwin, Prof. Dr.**
**Hüfferweg 9**
**W-4790 Paderborn(DE)**
Erfinder: **Hümmler, Johannes, Dipl.-Ing.**
**Lindenweg 30**
**W-4790 Paderborn(DE)**

(74) Vertreter: **Hanewinkel, Lorenz, Dipl.-Phys.**
**Patentanwalt Ferrariweg 17a**
**W-4790 Paderborn(DE)**

## Beschreibung

Die Erfindung betrifft ein Steuerverfahren zum Schäumen und Sintern von Kunststoff in einer Schäum- und Sintervorrichtung mit einer Sinterkammer, die mit einem steuerbaren Injektor für vorgeschäumtes und evtl. zwischengelagertes Kunststoffgranulatmaterial verbunden ist und die von mit Düsen durchsetzten Formwänden umschlossen ist, die von Dampfkammern umgeben sind, die an einer steuerbaren Heiz-, Kühl- und Prozeßmedienverund -entsorgungsvorrichtung angeschlossen sind, mit einer steuerbaren Schließvorrichtung der Formwände zum Entformen eines gesinterten Kunststoffteiles und mit Druck- und/oder Temperaturmeßsonden, die in der Sinterkammer, den Formwänden, den Dampfkammern und/oder Ver- und Entsorgungsvorrichtung angeordnet und mit einer Steuervorrichtung eingangsseitig verbunden sind, deren Ausgangssignale dem Injektor, der Ver- und Entsorgungsvorrichtung und der Schließvorrichtung zugeführt sind, und die Steuervorrichtung jeweils entsprechend einer Auswertung der Meßsignale in Phasen, nämlich mindestens einer Injektions-, Heiz-, Sinter-, Kühl- und Entformungsphase, die jeweils einen Arbeitszyklus bilden, in aufeinanderfolgenden Arbeitszyklen zugeordnet ansteuert, wobei die Auswertung derart erfolgt, daß abhängig von vorgegebenen Qualitätskennwerten der gesinterten Kunststoffteile Vergleichsdrücke oder -temperaturen bestimmt werden, von deren Erreichen aus, ggf. in Verbindung mit vorgegebenen Zeiten, Steuerkriterien gebildet werden, die die Beendigung bzw. den Beginn der jeweils zugeordneten Phase steuert.

Aus DE-P 32 43 632 ist es bekannt, die vorbestimmten Druck- oder Temperaturwerte, aus den verschiedenen Abhängigkeiten des Prozesses von den Materialdaten des Kunststoffes, den Formkennwerten des Sinterwerkzeuges und Installationskennwerten der Heiz-, Dampf- und Kühlmedienversorgung unter Berücksichtigung der für das gesinterte Kunststoffteil geforderten Qualität zu ermitteln. Hierzu ist eine sehr langwierige und aufwendige Vorarbeit notwendig, da mit den verschiedenen Materialien, die unterschiedlich vorgeschäumt und zwischengelagert sind, Versuche durchgeführt werden müssen, durch die die Abhängigkeiten ermittelt werden. Außerdem sind die Formkennwerte jedes Sinterwerkzeuges zu ermitteln, in die jeweils die Abmessungen der Sinterkammer, der Dampfkammer und der Formwand, sowie der Bedampfungswiderstand der Düsen in der Kammerwand und evtl. Besonderheiten der Konturen der Sinterkammer eingehen.

Darüberhinaus sind die Eigenschaften der Versorgungsanlage in Bezug auf die Medienbereitstellung, wie Regelgenauigkeit und Zeitkonstanten des Dampfdruckanstieges bzw. -abfalles, der Kühlflüssigkeitstemperatur usw. zu ermitteln und bei der Temperatur- bzw. Druckbestimmung für die Beendigung der diversen Prozeßphasen zu berücksichtigen. Zur Ermittlung der Zeitkonstanten werden die Differenzen der Temperaturen bzw. der Drücke in der Formwand, der Dampfkammer und der Sinterkammer in ihrem zeitlichen Verlauf ausgewertet. Diese bekannten Bestimmungsmethoden führen trotz des hohen erforderlichen Aufwandes nur zu beschränkten Genauigkeiten, da sich externe Einflüsse, z.B. Stillstandszeiten, verringerte Heizleistung des Dampfgenerators, Undichtigkeiten im Schließspalt der Sinterkammer usw. kaum vollständig erfassen lassen.

Im Rahmen der voruntersuchten Materialdatenstreuungen, der ermittelten Formkennwerte und der Kennwerte der Versorgungsanlage wurde in DE-P 32 43 632 gezeigt, daß eine Adaption des Prozesses durch automatische systematische schrittweise Änderung der vorgegebenen Betriebswerte, wie Schaltdrücke und -temperaturen oder -zeiten an veränderte Verhältnisse, z.B. veränderte Lagerzeit des vorgeschäumten Materials und damit größere Luftaufnahme und geringere Feuchtigkeit der Kunststoffperlen, bei laufender Qualtitätsbeurteilung der fertigen Kunststoffteile und Auswertung des Druck- und Temperaturaufbaues in der Sinterkammer möglich ist.

Diese Adaptionsmethode setzt jedoch grundsätzlich voraus, daß der Zusammenhang der ermittelten Bewertungskriterien der Qualtitätsbeurteilung und der Meßwertverläufe mit den einzelnen zu verändernden Steuerkriterien bekannt ist bzw. ermittelt wurde. Eine Übertragbarkeit eines für eine Vorrichtung erarbeiteten auf diesen Zusammenhängen basierenden Steuerverfahrens auf eine andere Sinterform oder andere Versorgungsvorrichtung ist somit jeweils nur beschränkt möglich, da eine neue Ermittlung der unterschiedlichen Kennwerte unerläßlich ist.

Es ist weiterhin aus Rechenberg "Evolutionsstrategie", Fr. Frommann Verl. Stuttgart-Bad Cannstadt, 1973, S. 38, bekannt, Regelsysteme selbstoptimierend auszuführen, wobei die Parameter in einer Regelstrecke abhängig von einem Gütekriterium der Regelung systematisch statistisch variiert werden, so daß ohne vorherige Kenntnis des zu regelnden Signales eine optimale Reglercharakteristik sich einstellt und die Reglercharakteristik sich auch Veränderungen des Signalcharakters anpaßt. Als nachteilig ist jedoch hierbei die Gefahr der Entstehung von Eigenschwingungen bei Überschreiten des Stabilitätsbereiches angegeben, obwohl der aufgezeigte Regelkreis vergleichsweise zu der Schäum- und Sintervorrichtung sehr einfach und überschaubar ist: Bei letzterer ist also um so mehr mit unerwünschtem Regelverhalten zu rechnen ist.

Es ist Aufgabe der Erfindung, ein Steuerungsverfahren für die Schäum- und Sintervorrichtung zu offenbaren, das es ermöglicht, Kunststoffmaterial, das in einem weiten Toleranzbereich der Vorschäum- und Zwischenlagereigenschaften, wie Dichte, Luft-, Treibgas- und Feuchtigkeitsgehalt liegt, zu geschäumten und gesinterten und weitgehend trockenen Teilen vorgegebener Qualität zu verarbeiten, wobei die jeweiligen Material- und Sinterformeigenschaften und die Eigenschaften der Versorgungsvorrichtung von dem Steuerungsverfahren selbstoptimierend berücksichtigt werden und nicht vorab oder laufend bestimmt werden müssen.

Die Lösung der Aufgabe besteht darin, daß die Steuerkriterien in zu den Arbeitszyklen gehörigen Sätzen zusammen mit jeweils einer Qualitätsabweichung von den Qualitätskennwerten, die meßtechnisch an dem jeweiligen Kunststoffteil oder Sinterkuchen bestimmt wurde, gespeichert werden, und dann aus diesen Sätzen eine vorgegebene Anzahl Sätze mit den jeweils geringsten Qualiätsabweichungen jeweils neu ausgewählt wird und für deren Steuerkriterien jeweils Kriterienmittelwerte bestimmt werden, und der Mittelwert der zugehörigen Qualitätsabweichungen jeweils bestimmt wird und ein neuer Satz von Steuerkriterien innerhalb vorgegebener Toleranzbereiche durch statistische Variation eines oder mehrerer der Steuerkriterien um seinen zugehörigen Kriterienmittelwert mit einer, gemäß der mittleren Qualitätsabweichung bestimmten, Streuung bestimmt, gespeichert und zur Steuerung des nächsten Arbeitszyklus vorgegeben wird.

Weitere vorteilhafte Ausgestaltungen sind in den Unteransprüchen angegeben.

In einer einfachsten Ausführung der Sintervorrichtung hat diese keine Druck- oder Temperatursensoren; sondern sie wird lediglich durch Zeitvorgaben als Steuerkriterien für die einzelnen Phasen gesteuert.

In einer speziellen Ausgestaltung der Sintervorrichtung, ist diese in bekannter Weise darüberhinaus mit Druck-und/oder Temperaturmeßsonden ausgerüstet, die in der Sinterkammer, den Formwänden, den Dampfkammern und/oder der Ver- und Entsorgungsvorrichtung angeordnet sind und eingangsseitig mit der Steuervorrichtung verbunden sind, die deren Meßsignale auswertet und dazu solche Steuerkriterien für den nächsten Arbeitszyklus bestimmt, die Vergleichsdrücke oder -temperaturen ggf. in Verbindung mit vorgegebenen Zeiten, für die Beendigung bzw. den Beginn der jeweils zugeordneten Phase sind. Diese Steuerkriterien werden entsprechend der angegebenen Lösung durch die statistische Variation, Mittelwertbildung und Steuerung der Streuung von Zyklus zu Zyklus bestimmt.

In vorteilhafter Weise wird mindestens eines der Steuerkriterien zur Auswertung einer Druckdifferenz zwischen einem Sinterkammerdruck und einem Dampfkammerdruck bzw. zwischen den beiden Dampfkammerdrücken bzw. einer Temperaturdifferenz zwischen einer Temperatur eines Sinterkuchens in der Sinterkammer und einer Formwand- oder Dampfkammertemperatur gebildet.

Die Auswertung der Differenzdrücke bzw. -temperaturen hat den Vorteil, daß die Druckschwankungen oder Temperaturangleichungen, die die stoßweise Belastung der Versorgungsanlage, die Regelschwankungen der Versorgungsanlage, die thermische Zeitkonstante der Formwand usw. verursachen, fast keine Auswirkung zeigen, da sie weitgehend kompensiert sind. Dies stellt eine wirksame Maßnahme gegen das Entstehen von Regelschwingungen bei der automatischen statistischen Variation der Steuerkriterien dar.

Der Differenzdruckanstieg gibt ein Maß für den Sinterzustand und er kann deshalb vorteilhaft für die Bestimmung des Endes der Heiz- und Sinterphase genutzt werden. Weiterhin sinkt der Differenzdruck bei hohem Treibstoffgehalt des Materials, das beispielsweise expandierbares Polyäthylen ist, in der Kühlphase nur langsam ab. Somit kann mit ihm vorteilhaft der Entformungszeitpunkt bestimmt werden.

Die Differenztemperatur der Sinterkuchen- und der Formwandtemperatur zeigt einerseits einen charakteristischen Verlauf während der Sinterphase, da sie nach Erreichen einer für eine gute Verschweißung der Kunststoffperlen erforderlichen Temperatur relativ um einige Grade Kelvin absinkt, so daß vom Zeitpunkt dieses Maximums aus das Ende der Sinterphase bestimmbar ist. Weiterhin zeigen Sinterkuchen aus Materialien mit hohem Treibgasgehalt, bei denen die Gefahr einer Deformation bei zu frühem Entformen, d.h. in zu weichem oder druckreichem Zustand, besteht, eine relativ langsame Abkühlung, obwohl eine schnelle Abkühlung der Formwand unabhängig vom Treibgasgehalt stattfindet, so daß die Temperaturdifferenz sich zur Bestimmung des Entformungszeitpunktes besonder gut eignet.

Weiterhin ist es vorteilhaft, Ersatzgrößen für die Qualitätsbeurteilung, zur Vereinfachung der laufenden Überwachung aus den am Sinterkuchen meßbaren Daten bereits während des Prozesses abzuleiten, so daß im adaptierten Zustand des Prozesses eine Qualiätsbeurteilung am fertigen Kunststoffteil zumindest teilweise ersetzt wird. Als Maß für die Innenverschweißung und damit für die Festigkeit eines Kunststoffteiles kann der zeitliche Differenzdruckabfall nach der Querbedampfung dienen, nachdem die Dampfdruckzufuhr beendet ist. Der unter Druck stehende Dampf in der einen Dampfkammer kann bei guter Verschweißung nur langsam in die andere, zur Entsorgung weiterhin geöffnete Dampfkammer, entweichen. Diese Prüfung kann statt mit Dampf auch mit Druckluft erfolgen. Dabei tritt eine geringere Beeinflussung der Messung des Druckabfalles durch Kondensation ein. In entsprechender Weise kann in einer weiteren Testphase nach der Autoklavbedampfung der zeitliche Druckabfall in einer der geschlossenen Dampfkammern gegenüber der auf der anderen Seite liegenden geöffneten als Indiz für die Verschweißung insgesamt und insbes. der Oberfläche dienen, also ersatzweise für die Messung der Oberflächenrauhigkeit genutzt werden. In bestimmten Grenzen können somit die Qualitätsabweichungen jeweils am Sinterkuchen statt am Kunststoffteil bestimmt werden.

Die statistische Variation der Steuerkriterien innerhalb vorgegebener Grenzen ermöglicht es, einen optimalen Betrieb zu finden, ohne daß die einzelnen Zusammenhänge der Einflußgrößen, der Steuerkriterien und der Qualitätskennwerte vorher bekannt sind. Durch die statistische Variation wird der gesamte durch die vorgegebenen Grenzwerte zugelassene Bereich nach und nach erfaßt, so daß das Zulaufen auf ein Nebenoptimum vermieden wird und ein geeignetes Mitlaufen der Steuerkriterien mit evtl. Änderungen der Einflußgrößen gesichert ist. Durch die Verringerung der Streuung bei geringen Abweichungen vom Optimum der Qualität, wird ein Arbeiten des Sinterverfahrens in dessen Nähe erreicht.

Außer der Auswertung der Qualitätskennwerte kann auch zusätzlich eine technischwirtschaftliche Bewertung zur Festlegung der Streuung hinzugenommen werden. So ist ein wichtiger Bewertungsmaßstab die Zykluszeit, die durch die Summe der Phasenzeiten gegeben ist und der Energie-und Medienverbrauch an Dampf, Kühlwasser, Kühlluft, Vakuum usw.

Das Steuerungsverfahren kann sowohl bei relativ einfachen Sinterverfahren als auch bei solchen mit ein-oder mehrseitiger Querbedampfung, mit ent- oder verkoppelter Heiz- und Prozeßdampfführung und mit ein-oder mehrstufiger Kühlung durch Kühlwasser, Druckluft bzw. Vakuum angewandt werden. Es ist weiterhin für Sintervorrichtungen mit mehreren unterschiedlichen Sinterkammern geeignet.

Versuche haben ergeben, daß die Adaptionsfähigkeit des Steuerungsverfahrens so weitreichend ist, daß vorgeschäumte Materialien mit sehr verschiedenem Treibgasgehalt und hohem oder niedrigem Luftgehalt, d.h. weitgehend unabhängig von der Vorverarbeitung, zu Kunststoffteilen vorgegebener Qualität verarbeitet wurden.

Anhand der Fig. 1 bis 7 wird das Verfahren beispielhaft beschrieben.

Fig. 1     zeigt schematisch eine Sintervorrichtung mit der Versorgungs- und Steuervorrichtung;

Fig. 2     zeigt Druckverläufe eines Sinterzyklusses in der Sinterkammer, der Dampfkammer und der Versorgungsvorrichtung, sowie den Differenzdruck zwischen Sinter- und Dampfkammer und den Luftdruck der Druckluftversorgung;

Fig. 3     zeigt Temperaturverläufe im Sinterkörper, in der Formwand und im Kondensatablauf, sowie die Temperaturdifferenz zwischen Sinterkuchen und Formwand;

Fig. 4     zeigt Differenzdruckverläufe für div. Materialien bei adaptierten Zyklusabläufen;

Fig. 5     zeigt Differenztemperaturverläufe für div. Materialien bei adaptierten Zyklusabläufen;

Fig. 6     zeigt ein Schema des Adaptionsverfahrens;

Fig. 7     zeigt die Wahrscheinlichkeiten der statistischen Variationen für verschiedene Adaptionsstufen für ein Steuerkriterium des Differzdruckes;

Fig. 8     zeigt die Funktionen zur Erzeugung der Steuerkriterien und der Auswertung der Qualitätsabweichungen.

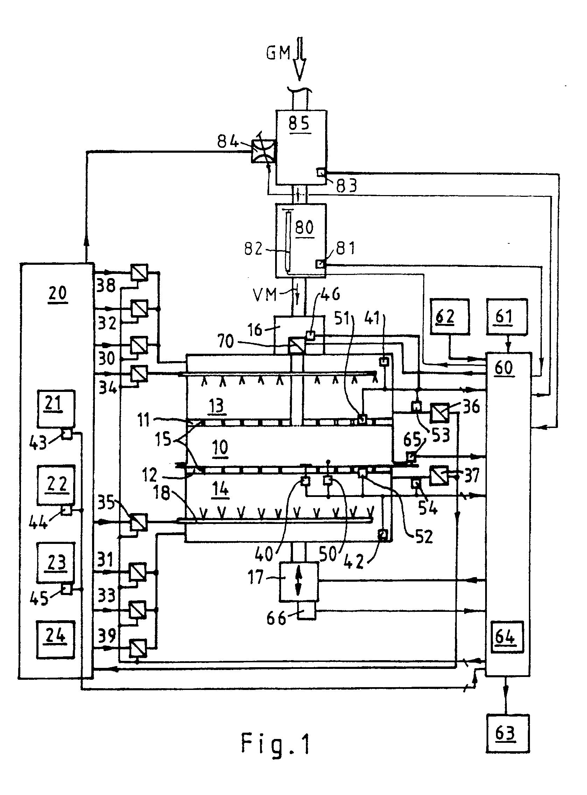

In Fig. 1 ist eine Sintervorrichtung bekannter Bauart gezeigt. Der Sinterkuchen befindet sich in der Sinterkammer (10), der von den Formwänden (11, 12) umschlossen ist.

Diese sind durch Düsen (15) mit der jeweils umgebenden Dampfkammer (13, 14) verbunden. Durch die Dampfkammer (13) ist ein druckluftbetriebener Injektor (16) für das vorgeschäumte und zwischengelagerte Material (VM) in die Sinterkammer (10) geführt. Die aus den Dampfkammern (13, 14) mit den Formwänden (11, 12) bestehenden Formhälften sind gegeneinander verschieblich gelagert. Durch den Schließantrieb (17) können sie zum Entformen des fertigen Sinterteiles geöffnet werden. In den Dampfkammern befinden sich Kühlwasserdüsen (18), die das Kühlwasser auf die Formwände verteilen.

Die Ver- und Entsorgungsvorrichtung (20) besteht in bekannter Weise aus einem geregelten Dampferzeuger (21), einem Drucklufterzeuger (22), einem Vakuumerzeuger (23) und einem Kühlwasserkühler (24). Die hiermit aufbereiteten Medien werden über steuerbare Ventile (30 bis 39) mit den Dampfkammern verbunden.

Die Steuereingänge der Ventile sowie des Injektorventils (70) und des Schließantriebes (17) sind mit den Ausgängen einer Steuervorrichtung (60) verbunden. Zu dieser führen eingangsseitig die Druck- und Temperatursensoren (40-46; 50-54).

Weiterhin ist eine Uhr (61), eine Eingabevorrichtung (62), z.B. eine Tastatur, und eine Ausgabevorrichtung (63), z.B. ein Drucker, mit der Steuervorrichtung (60) verbunden. Der Programmablauf des Steuerungsverfahrens und die vorgegebenen Daten, die Grenzwerte und die jeweiligen Meßwerte, die Steuerkriterien, Qualitätskennwerte, der Prozeßzustand usw. sind in dem Speicher (64) der Steuervorrichtung enthalten.

Das Granulatmaterial (GM) wird in der Vorschäumvorrichtung (85), die über einsteuerbares Ventil (84) mit Schäumdampf beaufschlagt wird und deren Schäumfunktion durch Auswertung der Signale der Sensoren (83), vorzugsweise für Materialdichte und Temperatur, überwacht wird, durch Steuerung oder Regelung mittels der Steuervorrichtung (60) auf ein vorbestimmtes Maß vorgeschäumt und dann einer Lager-und Trockenvorrichtung (80) zugeführt, von wo das fertig konditionierte Material (VM) durch den Injektor (16) in den Formhohlraum verbracht wird. Die Trockenvorrichtung (80) enthält Sensoren (81) für die Feuchtigkeit des Materials mittels derer über die Steuervorrichtung (60) die Temperatur und/oder Luftgeschwindigkeit oder die Materialdurchlaufgeschwindigkeit gesteuert wird.

Auf diese Weise ist das zur sinterung bereitsgestellte vorgeschäumte Material (VM) in seinen Eigenschaften zwischen bestimmten Grenzen und nahe zu Vorgabewerten gehalten. Diese Grenzen und Vorgabewerte werden vorteilhaft in einem der Steuerung des Sinterverfahrens übergeordneten oder nebengeordneten Steuerverfahren ermittelt, wobei die Bestimmung dieser Grenz- und Vorgabewerte als Vorschäumsteuerkriterien durch Variation in prinzipiell gleicher Weise wie die der Steuerkriterien der Sinterung erfolgt.  .

Auf diese Weise ist es möglich, einen optimierten Betrieb der Gesamtvorrichtung zu erreichen, der zu minimalem Energieverbrauch und kürzesten Sinterzeiten führt.

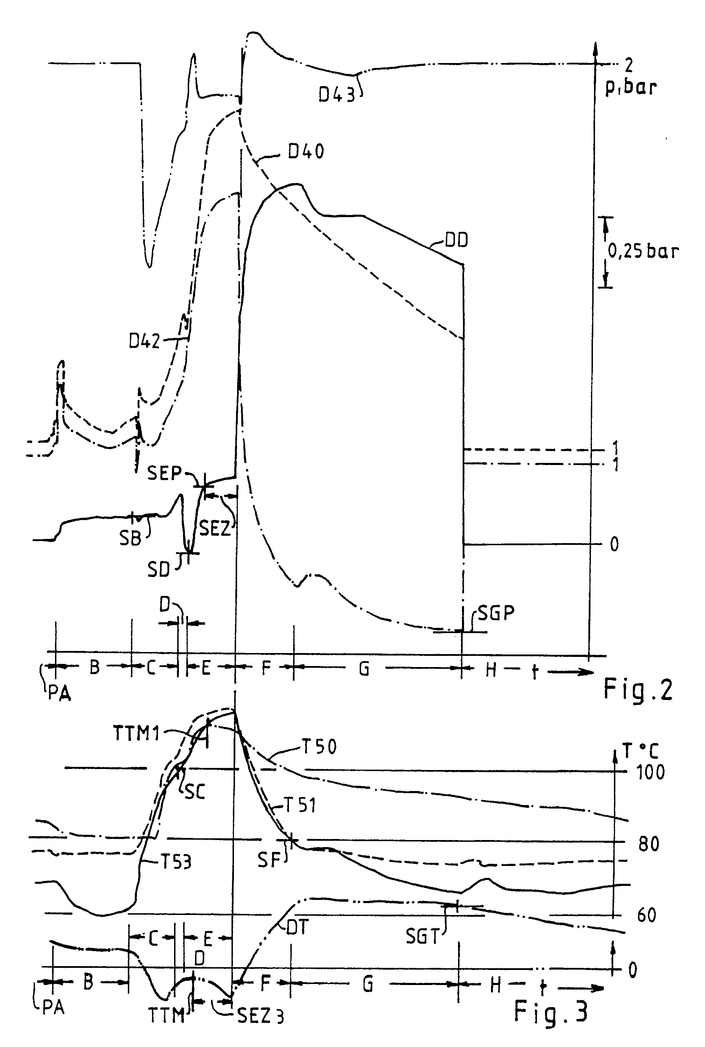

.  In Fig. 2 und 3 sind die Druck- bzw. Temperaturverläufe (D40, D42, D43; T50, T51, T53) eines Arbeitszyklus der Sintervorrichtung aufgezeigt, die mit den entsprechenden Sensoren, deren Bezugszeichen in der Bezeichnung genannt ist, gemessen worden sind. Wegen der besseren Erkennbarkeit der Einzelheiten sind die Kurven mit unterschiedlichem Nullpunkt dargestellt, wie an der Achse angezeichnet. Diese Relativmaßstäbe sind dort angegeben.

Außerdem sind der Differenzdruck (DD) zwischen den Meßwertverläufen am Sinterkammerdrucksensor (40), der den sogenannten Schäumdruck signalisiert, und einem Dampfkammerdrucksensor (41) und die Differenztemperatur (DT) zwischen den Meßwerten am Sinterkuchentemperatursensor (50), der weitgehend thermisch isoliert durch die Formwand geführt ist und vorzugsweise ein Stück in den Sinterkuchen hineinragt, und einem Formwandtemperatursensor (51), der thermisch gut mit der Formwand (11) verbunden ist, in den Figuren dargestellt.

Jeder Arbeitszyklus setzt sich in bekannter Weise aus aneinander anschließenden Phasen, dem Schließen (PA), dem Injizieren (B), dem Heizen (C), dem Querbedampfen (D), dem Sintern (E), dem Kühlen (F), dem Belüften (G) und dem Entformen (H) zusammen, die durch die Betätigung der Ventile bestimmt werden. In der Schließphase (PA) wird der Schließantrieb (17) betätigt bis zum dichten Formschluß. Zum Injizieren (B) werden das Injektorventil (70) und die Kondensatventile (36) und (37) geöffnet, so daß die Injektorluft durch die Düsen (15) über die Dampfkammern (13, 14) entweichen kann. Das Heizen (C) geschieht durch Öffnen der Dampf- und Kondensatventile (30, 31; 36, 37). Beim Querbedampfen (D) wird zu jeweils einer der Dampfkammern das DampfVentil (30) und zur anderen das Kondensatventil (37) geöffnet. Diese Phase kann auch wechselseitig 2-fach vorgesehen werden.

Zum Sintern (E) werden beide Dampfventile (30, 31) geöffnet; die Kondensatventile sind jedoch geschlossen. Beim Kühlen (F) werden die Kühlwasserventile (34, 35) und die Kondensatventile (36, 37) geöffnet und vorzugsweise die Vakuumventile (38, 39) ebenfalls geöffnet. Zum Belüften (G) sind die Vakuumventile (38, 39) geöffnet. Das Entformen (H) erfolgt durch Umkehrbetrieb des Schließantriebes (17). Alle jeweils nicht als offen bezeichneten Ventile sind geschlossen.

Die Steuerkriterien für die einzelnen Phasen sind wie folgt gewählt worden:

Das Schließen (PA) wird beendet, wenn ein Endschalter (65) dem Schließzustand der Formhälften an die Steuervorrichtung (60) meldet und ein Hydraulikdruck bestimmter Höhe gemeldet wird (nicht dargestellt).

Das Injizieren (B) wird beendet, wenn der Druckmeßwert am Injektordrucksensor (46) um einen vorgegebenen Wert gegenüber dem Druckmeßwert, der kurz nach Beginn des Injizierens auftritt, angestiegen ist. Dieser vorgegebene Wert ist ein erstes Steuerkriterium (SB).

Das Heizen (C) wird beendet, wenn die Kondensattemperaturen an den Temperatursensoren (53, 54) über einer vorgegebenen Kondensattemperatur, dem zweiten Steuerkriterium (SC), liegen.

Das Querbedampfen (D) wird beendet, wenn der Differenzdruck (DD) einen bestimmten vorgegebenen Wert, nämlich das Steuerkriterium (SD) erreicht hat.

Das Sintern (E) wird beendet, wenn der Differenzdruck (DD) während der Sinterzeit ein Maximum, oder einen bestimmten vorgegebenen Wert, oder der Kammerdruck einen bestimmten Wert, überschritten hat und danach eine vorbestimmte Zeit vergangen ist. Somit liegen hier zwei verschiedene Steuerkriterien (SEP,SEZ), nämlich das Druckkriterium (SEP) und das Zeitkriterium (SEZ) vor.

Alternativ kann auch das Ende der Sinterphase (E) aus der Differenztemperatur (DT) bestimmt werden, indem der Zeitpunkt (TTM) des Differenztemperaturmaximums bestimmt wird und danach eine Wartezeit, gemäß einem Zeitkriterium (SEZ3), angefügt wird; auch dieses Maximum zeigt einen bestimmten Sinterzustand weitgehend unabhängig von der Vorverarbeitung des eingesetzten Materials an.

Die Kühlphase (F) wird beendet, wenn die Formwandtemperaturen, die von den Temperatursensoren (51, 52) gemeldet werden, einen vorgegebenen Wert, der ein weiteres Steuerkriterium (SF) ist, unterschreiten.

Die Belüftungsphase (G) wird beendet, wenn der Differenzdruck (DD) unter einen vorbestimmten Wert, das Steuerkriterium (SGP), und/oder die Differenztemperatur (DT) unter einen vorbestimmten Wert, das Steuerkriterium (SGT), abgefallen sind.

Die Entformungsphase (H) wird beendet, wenn der Endschalter (66) an dem Schließantrieb (17) den geöffneten Zustand signalisiert oder ein evtl. vorhandener Entformungskontrollmelder den Abschluß des Auswurfs meldet.

Sämtliche Phasenzeiten werden entsprechend vorgegebener Maximalzeiten begrenzt, damit z.B. in Fällen des Versagens eines Sensors, bei einem unvollkommenen Schließen der Form infolge unvollständiger Füllung oder ähnlicher Störungen der Prozeß weiterläuft.

Die Druckschwankungen, die in dem Dampferzeuger (21) bei Belastung durch Dampfentnahme entstehen, zeigt der Druckverlauf (D43). Die Schwankungen sind u.a. abhängig von den Leitungswiderständen und den Speicherkapazitäten des Dampferzeugers und der Dampf- und Sinterkammern sowie der Heizleistung des Dampferzeugers. An den Übergängen der Phasen (C, D, E, F) sind die Versorgungsdrücke verschieden, wenn die Phasenzeiten bzw. Steuerkriterien verändert werden. Diese wirken sich unmittelbar auf die Kammer- und Sinterdruckverläufe (D40, D42) aus; der Differenzdruck (DD) ist von ihnen jedoch weitgehend unabhängig, weshalb auf ihn bezogen das Steuerkriterium (DEP) bestimmt wird. Ebenso ist das Vakuum während der Belüftungsphase (G) abhängig von den Versorgungs- und Formverhältnissen, und hinzukommt die mehr oder weniger starke Treibgas- und Feuchtigkeitsabgabe des Sinterkuchens. Letztere ist im wesentlichen für den Differenzdruck (DD) maßgeblich, der somit den Trocknungs- und Entgasungszustand signalisiert, und deshalb ist auf ihn das Steuerkriterium (SGP) bezogen.

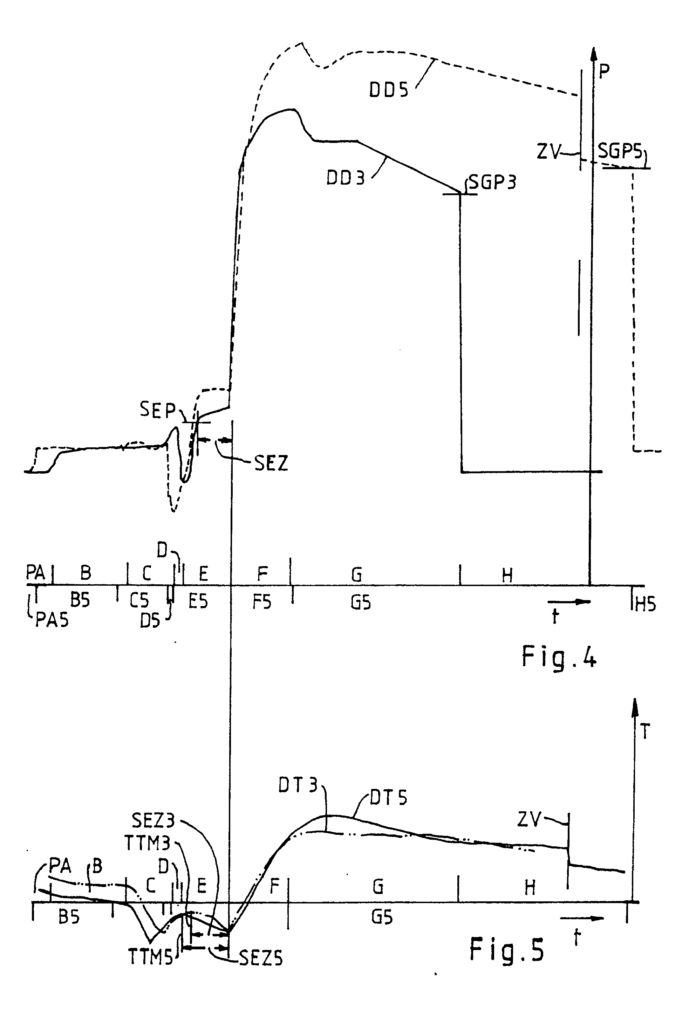

In Fig. 4 und 5 sind je 2 Verläufe des Differenzdruckes (DD) bzw. der Differenztemperatur (DT) verschieden vorgeschäumter und unterschiedlich lang zwischengelagerter Materialien für jeweils adaptierte Zyklusabläufe dargestellt. Es wurden Platten der Größe $25 \times 300 \times 300$ mm$^3$ erzeugt, und Material der Dichte 22 bis 27 g/l verwandt. Dabei sind die angegebenen Treibgasgehalte von 3 bzw. 5 Gewichtsprozenten jeweils in den Ziffern der Referenzzeichen (DD3, DD5;DT3, DT5) genannt. Außerdem ist der Feuchtigkeitsgehalt des Materials mit dem hohen Treibgasgehalt durch eine kurze Trockenzeit erhöht. Es zeigt sich, daß bei hohem Treibgasgehalt und hoher Feuchtigkeit der Differenzdruck in der Sinterphase (E) höher ansteigt und die Sinterng mehr Zeit benötigt.

Bei der Kühlung und Belüftung hingegen sinkt der Differenzdruck (DD5) sehr viel langsamer wegen der stärkeren Entgasung ab. Die Steuerkriterien (SGP3, SGP5) liegen durch die Adaption, die bezüglich der Formgenauigkeit und Restfeuchtigkeit als Qualitätskennwert erfolgte, nach zahlreichen Zyklen auf unterschiedlichen Niveaus.

Die Differnztemperaturverläufe zeigen abhängig von den Treibgasgehalten ähnliche Verläufe zu den Differenzdruckverläufen, weswegen sie sich ebenfalls zur Auswertung durch ein Steuerkriterium eignen. Ein charakteristischer Zustand des Sinterprozesses wird in allen Fällen durch die Maxima in der Sinterphase angezeigt. Dieser Differenztemperaturverlauf (DT3, DT5) ist kaum geeignet, durch einfachen Temperaturvergleich mit einem Steuerkriterium das Ende der Sinterphase zu signalisieren, und auch die Differenzdrücke (DD3, DD5) zeigen gegen einen geeigneten Zeitpunkt des Endes der Sinterphase (E) nur einen flachen Verlauf, so daß für einen einfachen Vergleich sich nur relativ ungenaue Schnittbereiche der Druckkurven ergeben. Aus diesem Grunde wird ein Vergleichskriterium (SEP) im steilen Anstieg der Druckkurve oder die Maximumzeitbestimmung TTM) vorgesehen und ein weiteres Zeitsteuerkriterium (SEZ,SEZ2, SEZ5) für die bis zum jeweiligen Sinterphasenende zusätzliche Wartezeit hinzugenommen. Die Länge dieser Wartezeit bestimmt weitgehend die Stärke der Versinterung der Kunststoffperlen, die für die Qualitätskennwerte der Oberflächenfestigkeit und -rauhigkeit maßgeblich ist.

Auch der Verlauf der Temperatur (T50) des Sinterkuchens zeigt in der Sinterphase (E) ein ausgeprägtes Maximum (TTM1), Fig. 3, das zur Stuerung in Verbindung mit einem Zeitkriterium dienen kann.

Fig. 4 und 5 haben den gleichen Zeitmaßstab, der an der Stelle ZV verkürzt ist, wie aus dem Sprung der Signale zu erkennen ist. Die Orientierung der Kurvendarstellungen ist auf das Ende der Sinterphasen (E bzw. E5) bezogen, und die Phasenzeiten sind in parallelen Maßstabeichungen durch die Benennungen der Phasen (PA-H; PA5-H5) angegeben. Die unterschiedliche Lage der Maximumzeiten (TTM3,TTM5) mit den zugehörigen Zeitkriterien (SEZ3, SEZ5) ist an den Verläufen der Differenztemperaturen (DT3,DT5) zu erkennen. Im übrigen sind die Kurven z.B. mit denen in Fig. 3 und 4 gleich.

Für die innere Versinterung ist die Querbedampfung vorwiegend maßgeblich; aus diesem Grunde ist ein Qualitätskennwert der Biegefestigkeit berücksichtigt, so daß dadurch das Steuerkriterium (SD) der Querbedampfung wesentlich beeinflußt wird.

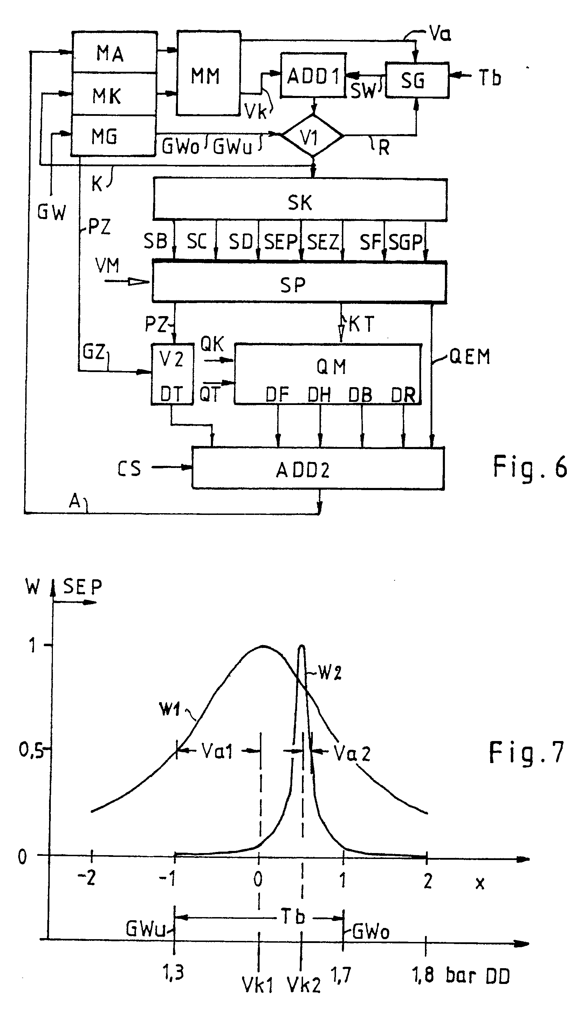

In Fig. 6 ist ein Schema des Adaptionsverfahrens dargestellt. Die in dem Sinterprozeß (SP) erzeugten Kunststoffteile (KT) werden einer Qualitätsmessung (QM) zugeführt.

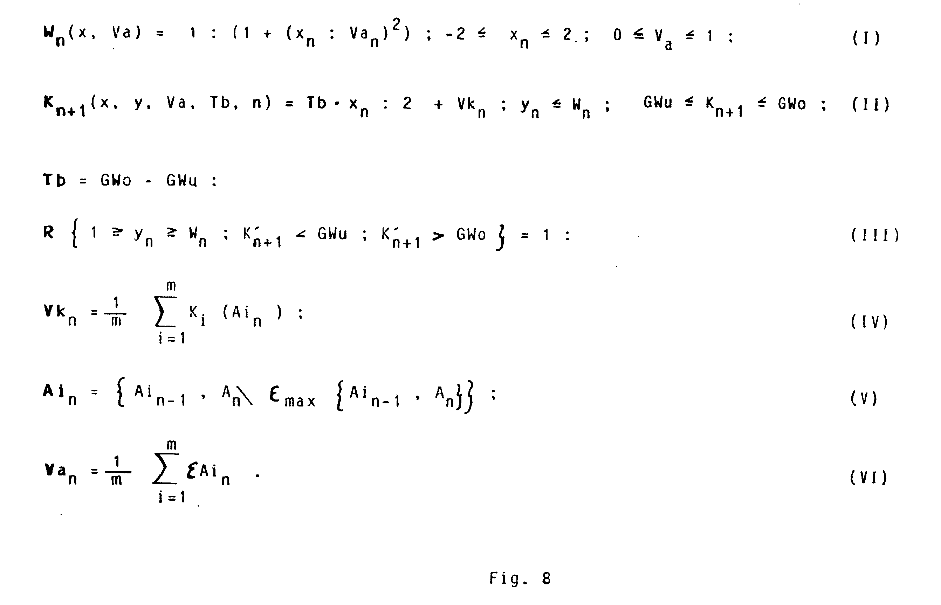

Die Qualitätskennwerte (QK): Formgenauigkeit, Feuchtigkeitsgehalt, Biegefestigkeit und Oberflächenrauhigkeit oder -festigkeit dienen zusammengenommen der Beeinflussung der Adaption. In den Versuchen zu den Fig. 2 bis 5 wurden vorgegeben: Biegefestigkeit 0,38-0,42 Newton/Quadratmillimeter, Druckspannung 0,17-0,21 Newton/Quadratmillimeter, Feuchtigkeit 0,2 Volumenprozente, Schwindung und Blähung je 0,5 Prozent. Es wird jeweils für ein gesintertes Kunststoffteil (KT) das Maß der Schrumpfung bzw. des Nachblähens (DF), die Abweichung des Feuchtigkeitsgehaltes (DH) von einem vorgegebenen Wert, die Abweichung der Biegefestigkeit (DB) von einem vorgegebenen Wert und die Abweichung der Oberflächenrauhigkeit (DR) von einem vorgegebenen Wert, jeweils bezogen auf einen zugelassenen Qualitätstoleranzbereich (QT) als Normierungsgröße und absolut genommen in einem Addierwerk (ADD2) addiert werden und die Summe als Qualitätsabweichung (A) dem Satz der Steuerkriterien des jeweiligen n-ten Zyklus, dessen zugehörigen Größen in den Formeln Fig. 8 mit dem Index n bezeichnet sind, im Speicherabschnitt (MA) zugeordnet zu dem Kriteriensatz des entsprechenden Zyklus, der im Speicherabschnitt (MK) gespeichert ist, abgelegt. Hierauf erfolgt eine Selektion und Elimination desjenigen Satzes mit der größten Qualitätsabweichung (A), so daß jeweils eine bestimmte Anzahl m der Sätze, z.B. 20, zusammen mit den Qualitätsabweichungen im Speicher verbleibt, aus denen die Mittelwerte der Steuerkriterien (Vk) und der Mittelwert der Qualitätsabweichung (Va) im Mittelwertbildner (MM) bestimmt werden. Jeder Satz von Steuerkriterien (K) besteht somit z.B. aus den Steuerkriterien (SB, SC, SD, SEP, SEZ, SF, SGP) für die einzelnen Phasen (B, C, D, E, F, G), und für jedes Kriterium wird der zugehörige Mittelwert (Vk) aus den diversen Sätzen gebildet, so daß jedes einzelne Steuerkriterium nach der Vorschrift gebildet und in den neuen Satz eingeordnet wird. Innerhalb der unteren und oberen vorgegebenen Grenzwerte (GWu, GWo), die den jeweiligen Toleranzbereich (Tb) begrenzen und die zusammen mit Zeitgrenzwerten (GZ) im Speicherabschnitt (MG) der Grenzwerte (GW) abgestellt sind, erzeugt der statistische Generator (SG) Streuwerte (SW), die zu den Kriterienmittelwerten (Vk) im Addierer (ADD1) addiert werden, jeweils neue Steuerkriterien (K, K'), indem diese auf das Einhalten der vorgegebenen Grenzwerte (GWo, GWu) in dem Vergleicher (V1) geprüft werden, der andernfalls ein Wiederholsignal (R) an den statistischen Generator (SG) abgibt.

Der neue Satz der Steuerkriterien wird im Steuerspeicherabschnitt (SK) und im Speicherabschnitt (MK) zur späteren Bewertung und evtl. Mittelwertbildung abgelegt.

Der statistische Generator (SG) steuert die Streuwerterzeugung mit einer gesteuerten Streuung, die durch den Mittelwert der Qualitätsabweichung (Va) bestimmt wird. Die Normierung der Steuerung der Streuung erfolgt geeignet in der Weise, daß bei Erreichen der maximalen Qualitätsabweichung (Va) die Halbwertsbreite dem Toleranzbereich (Tb) entspricht. Durch die Einengung der Streuung, wenn die Qualität der Teile zunimmt, bewegt sich die Steuerung nach einer kurzen Anlaufzeit von einigen Arbeitszyklen weitgehend in der Nähe der günstigen Mittelwerte; sie bewirkt somit eine schnelle Konvergenz der Adaption.

In Fig. 7 ist die Funktion des statistischen Generators bei der Erzeugung des Steuerkriteriums (SEP) dargestellt. Die beiden Kurven (W1, W2) zeigen die Wahrscheinlichkeit (W), mit jeweils der höchsten Wahrscheinlichkeit auf 1 normiert, mit welcher Vergleichswerte für den Differenzdruck (DD) zwischen den unteren und oberen Grenzwerten (GWu, GWo) von im Beispiel 1,3 bzw. 1,8 bar jeweils bei verschiedenen Streuungen, entsprechend der mittleren Qualitätsabweichungen (Va1, Va2) von 1 bzw. 0,1 um verschiedene Mittelwerte (Vk1, Vk2) bei anfänglich geringer bzw. später guter Adaption erzeugt werden. Die Werte außerhalb des Toleranzbereiches (Tb) werden durch den Vergleicher (V1), Fig. 6, unterdrückt.

Wie Fig. 6 weiter zeigt, berücksichtigt eine weitere, vorteilhafte Ausgestaltung des Verfahrens außer der Qualität der Kunststoffteile noch die Verfahrensökonomie durch die Auswertung der Zeitüberschreitung (DT), die die Zykluszeit (PZ) über eine vorgegebene Grenzzeit (GZ) hinaus dauert. Das Zeitüberschreitungssignal (DT) wird aus dem Zeitvergleicher (V2) dem Addierer (ADD1) zusätzlich zugeführt und geht somit in die Qualitätsabweichung (A) ein. Hierdurch wird verhindert, daß zwar hochwertige Teile erzeugt werden, jedoch die Steuerkriterien sich so einstellen, daß unnötig viel Prozeßzeit verbraucht wird. Statt der Prozeßzeit können vorteilhaft auch die einzelnen Phasenzeiten entsprechend der Energiekosten für Dampf, Vakuum, Druckluft, Kühlung ermittelt und bewertet in den Addierer (ADD1) geführt werden.

Eine Erweiterung der Steuervorrichtung auf die Erzeugung von Steuerkriterien für den Betrieb der Vorschäumvorrichtung ist vorteilhaft möglich. Solche Steuerkriterien sind die Dichte oder Feuchtigkeit des vorgeschäumten Materials, sowie die Zwischenlagerzeit bzw. Vorratsmenge oder Trocknungstemperatur oder Luftgeschwindigkeit. Die gesamte Anordnung der in Fig. 6 zur Steuerung des Sinterprozessors gezeigten Funktionsgruppen ist in der Steuervorrichtung (60), Fig. 1 enthalten und vorteilhaft durch ein Steuerprogramm unter Ausnutzung des vorhandenen Speichers (64) und eines Rechenwerkes verwirklicht.

Die Druck- und Temperatursensoren (40-46; 50-54; 81, 83) in der Sintervorrichtung sowie in der Vorschäum- und Trockenvorrichtung sind vorzugsweise jeweils mit digitalisierenden und zwischenspeichernden Meßwertumsetzern verknüpft, so daß die Steuervorrichtung über eine einzige, digital arbeitende Signalverbindungsleitung die einzelnen Meßwerte gezielt abrufen kann. Signalverfälschungen durch Kontaktpotentiale und Einstreuungen von Störfeldern treten nicht auf, wie dies bei analogen Meßsignalleitungen der Fall ist.

Eine vorteilhafte Ausführung dieser Sensoren besteht darin, daß jeweils in der Auswerteschaltung ein oberer und unterer Grenzwert von der Steuervorrichtung in lokale Grenzwertspeicher eingespeichert wird und bei Überschreiten bzw. Unterschreiten eines dieser Grenzwerte durch den Meßwert ein entsprechendes Meldesignal an die Steuervorrichtung abgegeben wird. Als digitalisierende Meßwertumsetzer eignen sich besonders zu Schwingungen im elektrischen Schwingkreis angeregte druck- bzw. temperaturempfindliche Kristalle, deren Schwingungsfrequenz durch Zählung bestimmt und ausgewertet wird. Es ist ein Vorteil des Verfahrens, daß die Temperatur- und Druckmeßwerte nicht geeicht gemessen werden müssen; denn der Auswertung dienen nur tendenzielle Änderungen und Vergleiche mit Vorgabewerten, die auf frühere Meßwerte jeweils des gleichen Sensors bezogen sind. Eine Normierung und Eichung der Sensoren kann somit entfallen, und die aus den Meßfrequenzen sich ergebenden Meßwerte lassen sich unmittelbar in die Verarbeitung nach dem Verfahren einführen.

Auch durch Alterung erfolgte Empfindlichkeitsverschiebung der Sensoren wird durch das Verfahren selbsttätig kompensiert. Dies trifft jedoch nicht für die Qualitätsmeßvorrichtung zu.

Die beschriebenen Steuerkriterien und Qualitätskennwerte können auch durch ähnliche ersetzt werden oder nur einzeln oder in Gruppen alternierend statistisch variiert werden. Dies stellt i.a. jedoch eine Komplizierung des Verfahrens dar und erbringt nur in seltenen Fällen eine bessere Konvergenz der Akaption auf günstige Steuerkriterien.

In einer sehr einfachen Version ist es vorgesehen, statt Druck- und Temperaturvergleichswerte als Steuerkriterien statistisch zu erzeugen, direkt die Zeitkriterien für Phasenabschaltzeitpunkte statistisch in vorgegebenen Grenzen als Steuerkriterien zu bestimmen. In dieser Ausführung, die sich für Vorrichtungen zur Erzeugung einfacher Produkte und bei der Verarbeitung eng tolerierten vorgeschäumten Materials eignet, entfallen die Druck- und Temperatursensoren. Diese Betriebsweise ist auch dann zweckmäßig, wenn während des Betriebes Störungen an einem der relativ empfindlichen Sensoren auftreten.

Wird zusätzlich oder auch anstelle der Qualitätsmessung (QM) am fertigen Kunststoffteil (KT) eine Qualitätsersatzgrößenmessen (QEM) am Sinterkuchen vorgenommen, so werden auch diese so gewonnenen Werte auf Einhaltung entsprechender Qualitätstoleranzgrenzen (QT) geprüft und dem Addierer (ADD2) zugeführt. Eine entsprechende Umsteuerung, welche Werte zu berücksichtigen sind, wird über die Steuervorrichtung mit dem Steuersignal (CS) vorgenommen, die auch die entsprechenden Meßphasen für die Prüfung der Druckfallgeschwindigkeit bzw. Druckluft-oder Dampfdurchlässigkeit des Sinterkuchens in den Ablauf des Arbeitszyklus jeweils nach dem Querbedampfen bzw. dem Sintern einsteuert.

In Fig. 8 sind die Funktionen zur Erzeugung der Steuerkriterien K und der Auswertung der Qualitätsabweichungen Va dargestellt. Die Gleichungen (I) geben die Wahrscheinlichkeit W an, mit der die Variation x bei einer mittleren Qualitätsabweichung Va auftritt. Es ist eine Glockenkurve, vgl. Fig. 7, vorgesehen. Die maximale Variation zu beiden Seiten des Mittelwertes ist mit +2 bis -2 normiert, so daß Streuwerte im gesamten Toleranzbereich (Tb) auch dann auftreten, wenn der Mittelwert an einer Grenze des Toleranzbereiches liegt. Die Qualitätsabweichung ist auf den Bereich zwischen 0 und 1 normiert.

Die Gleichungen (II) beschreiben die Erzeugung der einzelnen neuen Steuerkriterien K für den nächsten Steuerzyklus n+1, die aus jeweils einem statistischen Zahlenpaar x, y, der mittleren Qualitätsabweichung Va, und der jeweiligen Toleranzbreite Tb, die bis zum jeweils laufenden n-ten Zyklus n ermittelt wurden, bestimmt werden. Dabei wird die mit der halben Toleranzbreite multiplizierte statistische Zahl x als Variation zum entsprechenden Mittelwert des Kriteriums Vk addiert. Das gebildete Kriterium K ist nur zugelassen, wenn die Grenzbedingungen erfüllt sind, daß die statistische Zahl y kleiner als der Wert der zugelassenen Wahrscheinlichkeit W ist und innerhalb der Grenzwerte GWo, GWu liegt. Das Zahlenpaar x, y hat beispielsweise eine Folge von äquidistaten Werten mit einer Auflösung von 0,01, d.h. von 400 bzw. 100 Werten in Gleichverteilung für x bzw.y.

Die Gleichung (III) zeigt die Wiederholungssteuerung R der Erzeugung eines neuen statistischen Zahlenpaares x, y an, falls das Kriterium den in (II) genannten Grenzbedingungen nicht genügt. Bei der hier angegebenen Methode müssen also unter Umständen Kriterien mehrfach versuchsweise gebildet werden, bis die Grenzbedingungen in (II) erfüllt sind und ein geeigneter neuer Wert der Variation x gefunden worden ist. Die Überwachung der Grenzbedingung der zweiten statistischen Zahl y ist in dem statistischen Generator (SG), Fig. 6, enthalten. Diese Methode kann auch durch eine andere Art der gesteuerten Bereitstellung der Variation x ersetzt werden.

Die Gleichung (IV) zeigt die arihemtische Mittelwertbildung aus einer Anazhl m, der mit dem laufenden Index i bezeichneten, ausgewählten Kriterien K, die den Qualitätsabweichung A bis zum Zyklus n zugeordnet sind.

Die Auswahl der Sätze der Steuerkriterien K auf Grund der Qualitätskriterien A zeigt Gleichung (V) an. Aus der früheren Menge der Qualitätskriterien, die mit dem Index n-1 bezeichnet ist, wird unter Hinzunahme des letzten Qualtiätskriteriums das größte Element (element max) ausgeschieden.

Die Bildung des arithmetischen Mittels Va aus den m Elementen der ausgewählten Menge der Qualitätsabweichungen A gibt die Gleichung (VI) an.

## Patentansprüche

1.  Steuerverfahren zum Schäumen und Sintern von Kunststoff in einer Schäum- und Sintervorrichtung mit einer Sinterkammer (10), die mit einem steuerbaren Injektor (16) für vorgeschäumtes und evtl. zwischengelagertes Kunststoffgranulatmaterial (VM) verbunden ist und die von mit Düsen (15) durchsetzten Formwänden (11, 12) umschlossen ist, die von Dampfkammern (13, 14) umgeben sind, die an einer steuerbaren Heiz-, Kühl- und Prozeßmedienver- und -entsorgungsvorrichtung (20) angeschlossen sind, mit einer Steuerbaren Schließvorrichtung (17) der Formwände (11,12) zum Entformen eines gesinterten Kunststoffteiles und mit einer Steuervorrichtung (60), deren Ausgangssignale dem Injektor (16), der Ver- und Entsorgungsvorrichtung (20) und der Schließvorrichtung (17) zugeführt sind und die Steuervorrichtung (60) jeweils in Phasen, nämlich mindestens einer Injektions- (B), Heiz- (C), Sinter- (E), Kühl- (F) und Entformungsphase (H), die jeweils einen Arbeitszyklus bilden, in aufeinanderfolgenden Arbeitszyklen ansteuert, wobei abhängig von Abweichungen von vorgegebenen Qualitätskennwerten (QK), Steuerkriterien (K) gebildet werden, die die Beendigung bzw. den Beginn der jeweils zugeordneten Phase steuert, dadurch gekennzeichnet, daß die Steuerkriterien (K) in zu den Arbeitszyklen gehörenden Sätzen, zusammen mit jeweils einer Abweichung (A) von den vorgegebenen Qualitätskennwerten (QK), die meßtechnisch an dem jeweiligen Kunststoffteil (KT) oder einem in der Sinterkammer (10) befindlichen Sinterkuchen bestimmt wurde, gespeichert werden, und dann aus diesen Sätzen eine vorgebebene Anzahl (m) Sätze, denen die geringsten Qualitätsabweichungen (A) zugeordnet sind, jeweils neu ausgewählt wird und aus den Steuerkriterien (K) der ausgewählten Sätze jeweils Kriterienmittelwerte (Vk) bestimmt werden und der Mittelwert (Va) der zugehörigen Qualitätsabweichungen (A) jeweils bestimmt wird und ein neuer Satz von Steuerkriterien (K) innerhalb vorgegebener Toleranzbereiche (Tb) durch statistische Variation eines oder mehrerer der Steuerkriterien (K) um seinen zugehörigen Kriterienmittelwert (Vk) mit einer, gemäß der mittleren Qualtiätsabweichung (Va) bestimmten Streuung bestimmt, gespeichert und zur Steuerung des nächsten Arbeitszyklus vorgegeben wird.

2.  Steuerverfahren nach Anspruch 1, dadurch gekennzeichnet, daß die Steuerkriterien (K) die Phasenzeiten der Injektions- (B), Heiz- (C), Sinter- (E), Kühl- (F) und Druckabbau-Belüftungsphase (G) und vorzugsweise einer oder mehrerer Querbedampfungsphasen (D) sind.

3.  Steuerverfahren nach Anspruch 1, dadurch gekennzeichnet, daß die Drücke (P40, P41) in dem Sinterkuchen, in mindestens einer der Dampfkammern (13, 14) und/oder der Ver- und Entsorgungsvorrichtung (20) fortlaufend der Steuervorrichtung (60) gemeldet werden und das Steuerkriterium (K) mindestens einer der Phasen, Injizieren (B), Querbedampfen (D), Sintern (E) und/oder DruckabbauBelüften (G) als zugeordneter Vergleichsdruck vorgegeben ist, bei dessen Erreichen unmittelbar oder in Verbindung mit einem Zeitkriterium (SEZ) das jeweilige Phasenende bestimmt wird.

4.  Steuerverfahren nach Anspruch 3, dadurch gekennzeichnet, daß ein Differenzdruckwert (DD), vorzugsweise aus dem Druck (P40) des Sinterkuchens und einem der Dampfkammerdrücke (P41, P42) laufend gebildet wird und mindestens ein Steuerkirterium (K) als Vergleichsdruck (SEP, SD, SGP) zu dem Differenzdruck (DD) vorgegeben wird, von dessen Erreichen das Ende der Sinterphase (E), der Querbedampfung (D) bzw. des Druckabbau-Belüftens (G) bestimmt wird.

5. Steuerverfahren nach Anspruch 1, dadurch gekennzeichnet, daß Temperaturen (T50, T51) in dem Sinterkuchen, mindestens einer Formwand (11,12) und/oder mindestens einem Entsorgungsanschluß fortlaufend der Steuervorrichtung (60) gemeldet werden und das Steuerkriterium (K) mindestens einer der Phasen Heizen (C), Querbedampfen (D), Sintern (E), Kühlen (F) und/oder Belüften (G) als zugeordnete Vergleichstemperatur vorgegeben werden, bei deren Erreichen unmittelbar oder in Verbindung mit einem weiteren Steuerkriterium das Phasenende bestimmt wird.

6. Steuerverfahren nach Anspruch 5, dadurch gekennzeichnet, daß eine Differenztemperatur (DT) vorzugsweise aus der Temperatur (T50) des Sinterkuchens und einer der Formwandtemperaturen (T51, T52) fortlaufend gebildet wird und mindestens ein Steuerkriterium (K) als Vergleichstemperatur (SC, SF, SGT) zu der Differenztemperatur (DT) vorgegeben wird, von dessen Erreichen das Ende der Heizphase (C), des Kühlens (F) bzw. des Belüftens (G) bestimmt wird.

7. Steuerverfahren nach Anspruch 1, dadurch gekennzeichnet, daß als Steuerkirterium (K) für die Bestimmung des Sinterphasenendes ein Zeitkriterium (SEZ3, SEZ5) vorgegeben ist, dessen Bemessung jeweils mit einem Zeitpunkt eines Maximums (TTM3,TTM5) einer Differenztemperatur (DT) zwischen Temperaturen (T50, T51, T52) in dem Sinterkuchen und einer der Formwände (11, 12) beginnt.

8. Steuerverfahren nach Anspruch 1, dadurch gekennzeichnet, daß die Qualitätsabweichung (A) aus den Abweichungen einer Formgenauigkeit (DF), einer Feuchtigkeit (DH), einer Biegefestigkeit (DB) und/oder einer Oberflächenrauhigkeit oder - Festigkeit (DR) von den entsprechend vorgegebenen Qualitätskennwerten (QK) in einem jeweils vorgegebenen Qualitätstoleranzbereiche (QT), vorzugsweise additiv, ermittelt wird.

9. Steuerverfahren nach Anspruch 8, dadurch gekennzeichnet, daß die Qualitätsabweichung (A), gesteuert durch die Steuervorrichtung (60) zusätzlich oder ersatzweise, aus mindestens einer meßtechnisch am jeweiligen Sinterkuchen bestimmten Abweichung vor dem entsprechenden Qualitätskennwert (QK), vorzugsweise von dessen Druckluft- oder Dampfdurchlässigkeit am Ende der Querbedampfungsphase (D) und/oder der Sinterphase (E), ermittelt wird.

10. Steuerverfahren nach Anspruch 8 oder 9, dadurch gekennzeichnet, daß die Qualitätsabweichung (A) zusätzlich aus jeweils der Überschreitung einer vorgegebenen Grenzzeit (GZ) durch die Zykluszeit (PZ) ermittelt wird.

11. Steuerverfahren nach Anspruch 1, dadurch gekennzeichnet, daß der Toleranzbereich (Tb) durch vorgegeben obere und untere Grenzwerte (GWo, GWu) bestimmt ist und die Steuerkriterien (K) mit einer Wahrscheinlichkeit (W1, W2) die vorzugsweise einer Glockenkurve entspricht, und deren halbe Streuung der mittleren Qualitätsabweichung (Va1, Va2) entspricht und diese derart normiert ist, daß die mittlere Qualitätsabweichung (Va1) maximal dem halben Toleranzbereich (Tb) entspricht.

12. Steuerverfahren nach Anspruch 11, dadurch gekennzeichnet, daß für die Bestimmung eines Kriteriums (K) jeweils in einem statistischen Generator (SG) ein Streuwert (SW) gesteuert durch die mittlere Qualitätsabweichung (Va1, Va2) und normiert durch den zu dem Kriterium gehörigen Toleranzbereich (Tb) in einem zugelassenen Wertebereich mit doppelter Toleranzbreite erzeugt und zu dem Kriterienmittelwert (Vk) addiert wird und der so erzeugte Wert auf die Einhaltung des Bereiches zwischen dem oberen und unteren Grenzwert (GWo, GWu) geprüft wird und bei Nichteinhaltung ein Wiederholsignal (R) erzeugt wird, das die erneute Bestimmung des Kriteriums mit einem neuen Streuwert veranlaßt, und bei Einhaltung das Kriterium (K) gespeichert und zur Steuerung im nächsten Zyklus vorgegeben wird.

13. Steuerverfahren nach Anspruch 1, dadurch gekennzeichnet, daß mindestens eines der zu bestimmenden Steuerkriterien (K) eine vorgegebene Dichte, Feuchtigkeit oder Zwischenlagerzeit des vorgeschäumten Materials (VM) ist.

14. Steuerverfahren nach Anspruch 3, dadurch gekennzeichnet, daß die Drücke (P40, P41) in dem Sinterkuchen, in mindestens einer der Dampfkammern (13, 14) und der Ver-und Entsorgungsvorrichtung (20) mittels Drucksensoren, die jeweils einen druckabhängigen, elektrisch erregten Schwingungserzeuger enthalten, durch Auswertung der Frequenz der Schwingung ermittelt werden.

15. Steuerverfahren nach Anspruch 14, dadurch gekennzeichnet, daß jeweils in den Drucksensoren (40-46) Auswerteschaltungen lokal enthalten sind, die einen Vergleich mit den in diesen jeweils durch die Steuervorrichtung (60) gespeicherten Druck-Vergleichswerten durchführen und jeweils bei Vorliegen einer Gleichheit oder Vergleichswertüber- bzw. unterschreitung ein Meldesignal an die Steuervorrichtung abgibt.

16. Steuerverfahren nach Anspruch 5, dadurch gekennzeichnet, daß die Temperaturen (T50, T51) in dem Sinterkuchen, in mindestens einer Formwand (11, 12) und mindestens einem Entsorgungsanschluß mittels Temperatursensoren, die jeweils einen temperaturabhängigen, elektrisch erregten Schweingungserzeuger enthalten, durch Auswertung der Frequenz der Schwingung ermittelt werden.

17. Steuerverfahren nach Anspruch 16, dadurch gekennzeichnet, daß jeweils in den Temperatursensoren (50-54) Auswerteschaltungen lokal enthalten sind, die einen Vergleich mit den in diesen jeweils durch die Steuervorrichtung L-(60) gespeicherten Temperatur-Vergleichswerten durchführen und jeweils bei Vorliegen einer Gleichheit oder Vergleichswertüber- bzw. -unterschreitung ein Meldesignal an die Steuervorrichtung (60) abgibt.

18. Vorrichtung zur Durchführung des Verfahrens nach den Ansprüchen 1-17, dadurch gekennzeichnet, daß in einer Sintervorrichtung eine Sinterkammer (10) von Formwänden (11, 12) und diese von Dampfkammern (13, 14) umgeben angeordnet sind und diese über steuerbare Ventile (10-39) mit einer Versorgungsvorrichtung (20) verbunden sind und die Sinterkammer (10) über einen steuerbaren Injektor (16) mit einer Vorschäum- und Trockenvorrichtung (85, 80) verbunden ist, und in der Sinterkammer (10), den Formwänden (11, 12), den Dampfkammern (13, 14) der Versorgungsvorrichtung (20) und der Vorschäum- und Trockenvorrichtungen (85, 80), Druck- und Temperatursensoren (40-46; 50-54; 81, 83) angeordnet sind, deren Meßsignalleitungen mit einer Steuervorrichtung (60) verbunden sind, die eingangsseitig mit einer Eingabevorrichtung (62) und einer Uhr (61) und Qualitätskennwertmeßvorrichtungen verbunden sind und ausgangsseitig mit Steuereingängen der Ventile (30-39), der Versorgungsvorrichtung (20), dem Injektor (16) und der Vorschäum- und Trockenvorrichtung (85, 80) verbunden sind und einen Speicher (64) enthält in dem die Vorgabedaten, Vergleichswerte und ein Steuerprogramm zur Durchführung des Verfahrens enthalten sind und die mit einer Ausgabevorrichtung (63) zur Darstellung und Speicherung der jeweiligen Steuerkriterien (K), Abweichungen (A), Streu- und Mittelwerte (SW, Va) verbunden ist.

19. Vorrichtung nach Anspruch 18, dadurch gekennzeichnet, daß die Drucksensoren (40-46) druckabhängige Schwingungssensoren sind, die eine lokale Frequenzauswerteschaltung enthalten, deren Auswerteergebnis jeweils über die Meßsignalleitung in digitaler Form an die Steuervorrichtung (60) übertragbar ist.

20. Vorrichtung nach Anspruch 18, dadurch gekennzeichnet, daß die Temperatursensoren (50-54) temperaturabhängige Schwingungssensoren sind, die eine kokale Frequenz-Auswerteschaltung enthalten, deren Auswerteergebnis jeweils über die Meßsignalleitung in digitaler Form an die Steuervorrichtung (60) übertragbar ist.

**Claims**

1. Control process for foaming and sintering plastic in a roaming and sintering unit with a sinter chamber (10), which is connected to an adjustable injector (16) for pre-foamed, and sometimes interim stored, plastic granulate material (VM) and which is enclosed by forming walls (11, 12) interspersed with jets (15), which are surrounded by steam chambers (13, 14), which are connected to an adjustable heating and cooling unit, which also supplies and evacuates the process media (20), with an adjustable closing device (17) for the forming walls (11, 12) to turn out a sintered plastic blank, and with a control device (60) whose output signals are fed to the injector (16), the supply and evacuation device (20) and the closing device (17) and where the control device (60) controls successive working cycles in phases, namely at least one injection (B), heating (C), sintering (E), cooling (F) and turning out (H) phase, each of which forms one working cycle, whereby depending on deviations from preset quality values (QK), control criteria (K) are formulated, which control the end and/or start of the respective phase allocated, characterised by the fact that the control criteria (K) are stored in sets relating to the working cycles, together with one deviation for each (A) from the preset quality values (QK), which have been determined by means of measuring techniques on the respective plastic piece (KT) or on a sinter cake in the sinter chamber (10), and then from these sets a preset number (m) of sets, having the smallest quality deviations (A), is freshly selected each time and mean criteria values (Vk) are calculated each time from the control criteria (K) of the selected sets and the mean value (Va) of the relevant quality deviations (A) is determined in each case and a new set of control criteria (K) is determined and stored, within prescribed tolerances (Tb) through the statistical variation of one or more of the control criteria (K) around its respective mean criterion value (Vk), with a scatter determined in accordance with the mean quality deviation (Va) and it is then set for the next working cycle.

2. Control process as per claim 1, characterised by the fact that the control criteria (K) are the phase times of the injection (B), heating (C), sintering (E), cooling (F) and pressure reduction-ventilation phases (G) and preferably of one or more cross vaporization phases (D).

3. Control process as per claim 1, characterised by the fact that the pressures (P40, P41) in the sinter cake, in at least one of the steam chambers (13, 14) and/or the supply and evacuation device (20) are continuously notified to the control device (60) and that the control criterion (K) is set for at least one of the phases, injection (B), cross-vaporization (D), sintering (E) and/or pressure reduction-ventilation (G), as an allocated comparative pressure, which when reached determines the end of the respective phase, either immediately or in conjunction with a time criterion (SEZ).

4. Control process as per claim 3, characterised by the fact that a differential pressure value (DD), preferably from the pressure (P40) of the sinter cake and one of the vaporization chamber pressures (P41, P42) is constantly formulated and at least one control criterion (K) is set as a comparative pressure (SEP, SD, SGP) for the differential pressure (DD), which when reached determines the end of the sintering phase (E), the cross-vaporisation (D) or the pressure reduction-ventilation (G).

5. Control process as per claim 1, characterised by the fact that temperatures (T50, T51) in the sinter cake, of at least one forming wall (11, 12) and/or at least one evacuation connection, are constantly signalled to the control device (60) and the control criterion (K) is set for at least one of the phases heating (C), cross-vaporization (D), sintering (E), cooling (F) and/or ventilation (G) as the allocated comparative temperature, which when reached determines the end of the phase, either immediately or in conjunction with a further control criterion.

6. Control process as per claim 5, characterised by the fact that a differential temperature (DT) is constantly formulated, preferably from the temperature (T50) of the sinter cake and one of the forming wall temperatures (T51, T52) and at least one control criterion (K) is set as the comparative temperature (SC, SF, SGT) for the differential temperature (DT), which when reached determines the end of the heating phase (C), the cooling (F) and/or the ventilation (G).

7. Control process as per claim 1, characterised by the fact that as a control criterion (K) for determining the end of the sintering phase a time criterion (SEZ3, SEZ5) is set, whose measurement always begins at the time of a maximum (TTM3, TTM5) of a temperature differential between temperatures (T50, T51, T52) in the sinter cake and one of the forming walls (11, 12).

8. Control process as per claim 1, characterised by the fact that the quality deviation (A), is calculated, preferably cumulatively, from the deviations of mould precision (DF). humidity (DH), bending strength (DB) and/or a surface roughness or firmness (DR) from the corresponding set quality values (QK) within a quality tolerance range (QT), preset in each case.

9. Control process as per claim 8, characterised by the fact that the quality deviation (A), controlled by the control device (60) is calculated, either in addition or alternatively, from at least one deviation in the respective sinter cake, determined by measuring technique, from the corresponding quality value (QK), preferably from its permeability to compressed air or steam, at the end of the cross-vaporisation phase (D) and/or the sintering phase (E).

10. Control process as per claim 8 or 9, characterised by the fact that the quality deviation (A) is additionally calculated from the cycle time (PZ) when it exceeds a preset time limit (GZ).

11. Control process as per claim 1, characterised by the fact that the margin of tolerance (Tb) is determined by presetting upper and lower limit values (GWo, GWu) and the control criteria (K) are set with a probability (W1, W2) which preferably corresponds to a bell-shaped curve, half of whose scatter corresponds to the mean quality deviation, (Va1, Va2) and which is standardised in such a way that the mean quality deviation (Va1) corresponds at most to half of the margin of tolerance (Tb).

12. Control process as per claim 11, characterised by the fact that for determining a criterion (K), in a statistical generator (SG) a scatter value (SW) is produced, which is controlled by the mean quality deviation (Va1, Va2) and standardised by the margin of tolerance (Tb) belonging to the criterion, in a permitted range of values with a double margin of tolerance and this is added to the mean criterion value (Vk) and the value thus produced is checked to see that it falls within the range between the upper and lower limit values (GWo, GWu) and if it does not, a repeat signal (R) is produced, which triggers the renewed determining of the criterion with a new scatter value, and when it complies the criterion (K) is stored and set for use in controlling the next cycle.

13. Control process as per claim 1, characterised by the fact that at least one of the control criteria to be determined (K) is a preset density, humidity or interim storage time for the prefoamed material (VM).

14. Control process as per claim 3, characterised by the fact that the pressures (P40, P41) in the sinter cake, in at least one of the vaporization chambers (13, 14) and in the supply and evacuation device (20) are calculated by evaluating the frequency of oscillation, using pressure sensors, each containing a pressure-dependent, electrically excited oscillator.

15. Control process as per claim 14, characterised by the fact that in the pressure sensors (40-46) evaluation circuits are contained locally which make comparisons with the comparative pressure values stored by the control device (60) and send a signal to the control device whenever the pressure is equal to, higher or lower than the comparative value.

16. Control process as per claim 5, characterised by the fact that the temperatures (T50, T51) in the sinter cake, in at least one mould wall (11, 12) and at least one evacuation connection are determined by means of temperature sensors, which each contain a temperature-dependent, electrically excited oscillator, by evaluating the frequency of the oscillations.

17. Control process as per claim 16, characterised by the fact that in the temperature sensors (50-54) evaluation circuits are contained locally, which make comparisons with the comparative temperature values stored there by the control device L(60) and send a signal to the control device (60) when the temperature is equal to, higher or less than the comparative values.

18. Device for conducting the process as per claims 1 to 17, characterised by the fact that in one sintering installation there is a sinter chamber (10) enclosed by forming walls (11, 12) and these are surrounded by vaporization chambers (13, 14) and these are connected to a supply device (20) via control valves (10-39) and the sinter chamber (10) is connected by means of an adjustable injector (16) to a pre-foaming and drying unit (85, 80) and in the sinter chamber (10), the forming walls (11, 12), the vaporization chambers (13, 14), the supply device (20) and the pre-foaming and drying units (85,80), pressure and temperature sensors (40-46; 50-54; 81, 83) are arranged, whose measuring signal leads are connected to a control device (60), which on the entry side is connected to an input device (62) and a clock (61) and quality measuring devices, and on the exit side to control entries to the valves (30-39), the supply unit (20), the injector (16) and the pre-foaming and drying unit (85, 80) and which contains a memory (64) which holds the preset data, comparative values and a control program for running the process and which is connected to an output device (63) for setting up and storing the respective control criteria (K), deviations (A), scatter and mean values (SW, Va).

19. Device as per claim 18, characterised by the fact that the pressure sensors (40-46) are pressure-dependent oscillation sensors (40-46), which contain a local frequency evaluation circuit, whose evaluation result can be transmitted in digital form to the control device (60) via the measuring signal leads.

20. Device as per claim 18, characterised by the fact that the temperature sensors (50-54) are temperature-dependent oscillation sensors, which contain a local frequency evaluation circuit, whose evaluation result can be transmitted in digital form to the control device (60) via the measuring signal leads.

## Revendications

1. Procédé de régulation adaptif pour le moussage et le frittage de matière synthétique dans un dispositif de moussage et frittage comprenant une chambre de frittage (10), reliée à un injecteur réglable (16) pour granulé synthétique (VM) prémoussé et éventuellement entreposé, et ceinte de parois de moule (11, 12), parsemées de buses (15) et entourées de chambres à vapeur (13, 14), lesquelles sont raccordées à un dispositif de chauffage, de refroidissement, ainsi que d'alimentation et d'évacuation (20), avec dispositif de commande de fermeture (17) des parois de moule (11, 12) pour le démoulage d'une pièce frittée en matière plastique, et avec un dispositif de commande (60), dont les signaux de sortie sont conduits à l'injecteur (16), au dispositif de chauffage, de refroidissement, d'alimentation et d'évacuation (20), ainsi qu' au dispositif de commande de fermeture (17), le dispositif de commande (60) amorçant en cycles de travail successifs, un cycle de travail comprenant au moins une phase d'injection (B), une phase de chauffage (C), une phase de frittage (E), une phase de refroidissement (F) et une phase de démoulage (H), et des critères de régulation (K), commandant le début ou la fin de la phase concernée, étant établis en fonction des divergences de valeurs caractéristiques de qualité prédéfinies, caractérisé par le fait que les critères de régulation (K) sont mémorisés en blocs afférents aux cycles de travail, avec une déviation (A) respective des caractéristiques de qualité (QK), qui a été déterminée techniquement par mesure pour la pièce synthétique (KT) ou un gâteau fritté se trouvant dans la chambre de frittage (10), et qu'un nombre prédéfini (m) de blocs, auxquels les divergences de qualité les plus faibles (A) sont attribuées, est ensuite sélectionné, respectivement, de nouveau, à partir de ces blocs, et que des valeurs de critères moyennes (vk) sont déterminées, respectivement, à partir des critères de régulation (K) des blocs sélectionnés, et que la valeur moyenne (Va) des déviations de qualité (A) afférentes est déterminée respectivement, et un nouveau bloc de critères de régulation (K) est déterminé, dans des zones de tolérance (Tb) prédéfinies, par variation statistique d'un ou plusieurs critères de régulation (K) de sa valeur de critère moyenne (vk) afférente, avec une répartition, déterminée selon la valeur moyenne de déviation de qualité (Va), et est mémorisé et prédéfini pour la régulation du cycle de travail suivant.

2. Procédé de régulation selon revendication 1, caractérisé par le fait que les critères de régulation (K) sont les temps de durée des phases d'injection (B), chauffage (c), frittage (E), refroidissement (F), suppression de pression et aération (G) et, de préférence, d'une ou plusieurs phases de vaporisation transversale (D).

3. Procédé de régulation selon revendication 1, caractérisé par le fait que les pressions (P40, P41) dans le gâteau de frittage, dans au moins l'une des chambres à vapeur (13, 14) et/ou le dispositif d'alimentation et d'évacuation (20), sont signalées continuellement au dispositif de commande (60) et que le critères de régulation d'au moins une des phases d'injection (B), de vaporisation transversale (D), de frittage (E) et/ou de suppression de pression et d' aération (G) est prédéfini en tant que pression de comparaison attribuée, la fin de la phase en question étant déterminée, directement ou en relation avec un critère de temps (SEZ), lorsque cette pression de comparaison est atteinte.

4. Procédé de régulation selon revendication 3, caractérisé par le fait qu'une valeur de pression différentielle (DD), est établie continuellement, de préférence sur la base de la pression (P40) du gâteau fritté et de l'une des pressions de la chambre de vapeur (P41, P42), et qu'un critère de régulation (K), au moins, est prédéfini, en tant que pression de comparaison (SEP, SD, SGP),par rapport à la pression différentielle (DD), ce critère déterminant la fin de la phase de frittage (E), de vaporisation transversale (D) ou de suppression de pression et d' aération (G) étant déterminée lorsque cette pression de comparaison est atteinte.

5. Procédé de régulation selon revendication 1, caractérisé par le fait que les températures (T50, T51) à l'intérieur du gâteau fritté, d'au moins une paroi de moule (11/12) et/ou d' au moins un raccord d'évacuation sont signalées continuellement au dispositif de commande (60) et que le critère de régulation (K) d'au moins une phase de chauffage (C), de vaporisation transversale (D), de frittage (E), de refroidissement (F) et/ou de suppression de pression et d' aération, est prédéfini en tant que température de comparaison, à l'obtention de laquelle la fin de la phase est déterminée directement ou en relation avec un autre critère de régulation (K).

6. Procédé de régulation selon revendication 5, caractérisé par le fait qu' une température différentielle (DT) est établie continuellement, de préférence sur la base de la température (T50) du gâteau fritté et de l'une des températures (T51, T52) des parois, et qu'au moins un critère de régulation (K) est prédéfini, en tant que température de comparaison (SC, SF, SGT), par rapport à la température différentielle (DT), la fin de la phase de chauffage (C), de refroidissement (F) ou de suppression de pression et d' aération (6) étant déterminée lorsque cette température de comparaison est atteinte.

7. Procédé de régulation selon revendication 1, caractérisé par le fait que, comme critère de régulation (K) pour la détermination de la fin de la phase de frittage (E), un critère de temps (SEZ3, SEZ5) est prédéfini, dont le calcul respectif commence par le moment d'un maximum (TTM3, TTM5) d'une température différentielle (DT) entre les températures (T50, T51, T52) dans le gâteau fritté .et dans l'une des parois de moule (11, 12).

8. Procédé de régulation selon revendication 1, caractérisé par le fait que la déviation de qualité (A) est établie, de préférence additivement, sur la base des déviations d'une précision de forme (DF), d'une humidité (DH)., d'une résistance à la flexion (DB) et/ou d'une rugosité ou fermeté de surface (DR) par rapport aux valeurs caractéristiques de qualité (QK) prédéfinies, dans une zone de tolérance de qualité (QT) respective, prédéfinie.

9. Procédé de régulation selon revendication 8, caractérisé par le fait que la déviation de qualité (A), commandée par le dispositif de commande (60) est établie, à la fin de la phase de vaporisation transversale (D) et/ou de phase de frittage (E), en plus ou en remplacement, à partir d'au moins une déviation, déterminée techniquement par mesure faite sur le gâteau fritté en question, par rapport à la valeur caractéristique de qualité (QK) correspondante, de préférence de sa perméabilité à l'air comprimé ou à la vapeur.

10. Procédé de régulation selon revendication 8 ou 9, caractérisé par le fait que la déviation de qualité (A) est établie, en plus, sur la base du dépassement respectif d'un temps limite (GZ) par le temps de cycle (PZ).

11. Procédé de régulation selon revendication 8 ou 9, caractérisé par le fait que la zone de tolérance (Tb) est déterminée par les valeurs limites supérieure et inférieure (GWo, GWu) et que les critères de régulation (K) sont choisis de sorte que leur probabilité corresponde de préférence à une courbe en cloche et que leur demi-répartition corresponde à la déviation de qualité moyenne (Va1, Va2), et que celle-ci se trouve normalisée de sorte que la déviation de qualité moyenne (Va1, Va2) corresponde au maximum à la demi-zone de tolérance (Tb).

12. Procédé de régulation selon revendication 11, caractérisé par le fait que pour la définition de chaque critère de régulation (K), une valeur de répartition (SW), commandée par la déviation de qualité moyenne (Va1, Va2) et normalisé par la zone de tolérance (Tb) afférant au critère, est engendrée dans un générateur statistique (SG) et additionné à la valeur de critère moyenne (vk), et que la valeur, ainsi obtenue, est contrôlée quant au respect de la plage entre les valeurs limites supérieure et inférieure (GWo, GWu)m, et, qu'en cas de non respect, un signal de rappel (R) est engendré, lequel cause la définition réitérée du critère avec une nouvelle valeur de répartition (SW), et que, en cas de respect, le critère de régulation (K) est mémorisé et prédéfini aux fins de régulation dans le cycle suivant.

13. Procédé de régulation selon revendication 1, caractérisé par le fait qu'au moins un des critères de régulation (K) à définir est une densité, une humidité ou un temps d'entreposage du matériel prémoussé (WM)

14. Procédé de régulation selon revendication 3, caractérisé par le fait que les pressions (P40, P 41) dans le gâteau fritté sont établies par exploitation de la fréquence des oscillations dans au moins une des chambres à vapeur (13, 14) et dans le dispositif de chauffage, refroidissement, d'alimentation et d'évacuation (20) à l'aide de sondes manométriques (40-46), comprenant chacune un générateur d'oscillations.

15. Procédé de régulation selon revendication 14, caractérisé par le fait que chacune des sondes manométriques (40-46) contient, localement, des circuits d'interprétation, qui procèdent à une comparaison avec les valeurs comparatives de pression y mémorisées par le dispositif de commande (60), et lancent chaque fois un signal d'état respectif au dispositif de commande (60) en cas d'égalité ou de souspassement ou de dépassement des valeurs de comparaison.

16. Procédé de régulation selon revendication 5, caractérisé par le fait que les températures (T50, T51) dans le gâteau fritté, dans, au moins, une paroi de moule (11, 12) et, au moins un raccord d'évacuation, sont établies, par évaluation de la fréquence d'oscillation, à l'aide de sondes de température, contenant, chacune, un générateur d'oscillations, influencé par la température et excité électriquement

17. Procédé de régulation selon revendication 16, caractérisé par le fait que chacune des sondes monométriques (40-46) contient, localement, des circuits d'interprétation, qui procèdent à une comparaison avec les valeurs comparatives de pression y mémorisées par le dispositif de commande (60), et lancent chaque fois un signal d'état respectif au dispositif de commande (60) en cas d'égalité ou de souspassement ou de dépassement des valeurs de comparaison.

18. Dispositif d'exécution du procédé selon revendications 1 à 17, caractérisé par le fait qu' une chambre de frittage (10), ceinte de parois de moule (11, 12), entourés eux-mêmes de chambres à vapeur (13, 14), est disposée dans un dispositif de frittage, et que chambre de frittage (10) et chambres à vapeur (13, 14) sont reliées à un dispositif de distribution (20), à l'aide de vannes pilotables (30-39) et que la chambre de frittage (10) est reliée, par l'intermédiaire d'un injecteur (16) à un dispositif de prémoussage et séchage (85, 80), et que, dans la chambre de frittage (10), les chambres à vapeur (13, 14), le dispositif de distribution (20) et les dispositifs de prémoussage et séchage (85, 80), des sondes de pression et de température (40-46; 50-54; 81-83) sont disposées, dont les circuits d'acheminement des signaux de mesure sont reliés à un dispositif de commande (60), qui est reliée, côté entrée, à un dispositif d'introduction (62), à une horloge (61) et à des instruments de mesure de valeurs caractéristiques de qualité, et, côté sortie, à des entrées de commande des vannes (30-39), au dispositif de distribution (20), à l' injecteur (16) et au dispositif de prémoussage et séchage (85, 80), et comprend une mémoire (64), contenant les données allouées, les valeurs comparatives et un programme de commande pour l'exécution du procédé, et est reliée à un dispositif de sortie (63) servant à la représentation et à la mémorisation des critères de régulation (K) respectifs, déviations de qualité (A), valeurs de répartition et valeurs moyennes (Va).

19. Dispositif selon revendication 18, caractérisé par le fait que. les sondes manométriques (40-46) sont des capteurs de vibrations, influencés par la pression, comprenant un circuit local d'interprétation de fréquence, dont chaque résultat d'exploitation est transférable ou dispositif de commande (60), par l'intermédiaire du circuit d'acheminement des signaux de mesure, sous forme numérique.

20. Dispositif selon revendication 18, caractérisé par le fait que les sondes de température (50-54) sont des capteurs de vibrations influencés par la température, comprenant un circuit local d'interprétation de fréquence, dont chaque résultat d'exploitation est transférable au dispositif de commande (60), par l'intermédiaire du circuit d'acheminement des signaux de mesure sous forme numérique.

Fig.1

Fig.2

Fig.3

Fig.4

Fig.5

Fig. 6

Fig. 7

$$W_n(x, Va) = 1 : (1 + (x_n : Va_n)^2) \; ; \; -2 \leqq x_n \leqq 2 \; ; \; 0 \leqq V_a \leqq 1 : \qquad (I)$$

$$K_{n+1}(x, y, Va, Tb, n) = Tb \cdot x_n : 2 + Vk_n \; ; \; y_n \leqq W_n \; ; \quad GWu \leqq K_{n+1} \leqq GWo \; ; \quad (II)$$

$$Tb = GWo - GWu :$$

$$R \left\{ 1 \geqq y_n \geqq W_n \; ; \; K'_{n+1} < GWu \; ; \; K'_{n+1} > GWo \right\} = 1 : \qquad (III)$$

$$Vk_n = \frac{1}{m} \sum_{i=1}^{m} K_i \, (Ai_n) \; ; \qquad (IV)$$

$$Ai_n = \left\{ Ai_{n-1} \, , \, A_n \backslash \, \mathcal{E}_{max} \left\{ Ai_{n-1} \, , \, A_n \right\} \right\} ; \qquad (V)$$

$$Va_n = \frac{1}{m} \sum_{i=1}^{m} \mathcal{E}Ai_n \; . \qquad (VI)$$

Fig. 8